# EUROPÄISCHE PATENTSCHRIFT

(11) **EP 3 045 092 B1**
(45) Veröffentlichungstag und Bekanntmachung des Hinweises auf die Patenterteilung: **26.12.2018**
(21) Anmeldenummer: 15188162.0
(22) Anmeldetag: 02.10.2015
(51) Int. Cl.: A47J 31/44, A47J 31/46

(54) **GETRÄNKEZUBEREITUNGSVORRICHTUNG SOWIE BETRIEBSVERFAHREN**
BEVERAGE PREPARATION DEVICE AND METHOD OF OPERATION
DISPOSITIF DE PRÉPARATION DE BOISSONS ET PROCÉDÉ DE FONCTIONNEMENT

(30) Priorität: 14.01.2015 DE 102015100489
(43) Veröffentlichungstag der Anmeldung: 20.07.2016
(73) Patentinhaber: Eugster/Frismag AG, 8580 Amriswil (CH)
(72) Erfinder: Birke, Lars, 8274 Tägerwilen (CH)
(74) Vertreter: Patentanwälte Behrmann Wagner PartG mbB

(56) Entgegenhaltungen:
- EP-A1- 1 911 382
- EP-A1- 2 272 408
- EP-A1- 2 695 559
- EP-A1- 2 798 989
- EP-A1- 2 807 964
- DE-B3-102007 048 556
- DE-C1- 19 502 688
- DE-U1-202008 016 400

## Beschreibung

Die Erfindung betrifft eine Getränkezubereitungsvorrichtung, insbesondere eine Kaffeemaschine, gemäß des Anspruchs 1, mit einer Heizeinrichtung zur Dampferzeugung, mit einer fluidleitend mit der Heizeinrichtung verbundenen Düseneinrichtung zum Erwärmen und/oder Aufschäumen von Milch mittels Dampf, wobei mit der Düseneinrichtung bei Dampfbeaufschlagung ein Unterdruck erzeugbar ist, mit welchem über eine fluidleitend mit der Düseneinrichtung verbundene und über eine Spülleitung mit einem Spülmedium beaufschlagbare Ansaugleitung Milch ansaugbar ist, und wobei zwischen einem Ansaugende der Ansaugleitung und der Düseneinrichtung eine einen verstellbaren Ventilkörper aufweisende Ventileinrichtung angeordnet ist, die in einer Schließstellung ein Strömen von Spülmedium aus der Spülleitung zum Ansaugende der Ansaugleitung verhindernd ausgebildet ist, wobei die Ventileinrichtung als druckabhängig selbsttätig schaltendes Rückschlagventil ausgebildet ist, dessen Ventilkörper bei Beaufschlagung der Ansaugleitung mit Spülmedium über die Spülleitung zum Schließen des Rückschlagventils selbsttätig dichtend mit dem Ventilsitz zusammen wirkt, gekennzeichnet durch Logikmittel, die automatisiert, insbesondere in einem festgelegten oder einstellbaren Zeitintervall und/oder nach einem festgelegten oder einstellbaren Getränkezubereitungsintervall einen Spülvorgang initiierend ausgebildet sind, bei welchem über die Spülleitung Spülmedium in die Ansaugleitung gefördert wird und das Rückschlagventil selbsttätig schließt. Dabei erfolgt die Druckbeaufschlagung auf den Ventilkörper entgegen der Ansaugrichtung der Milch, in der Milch von der Düseneinrichtung über die Ansaugleitung ansaugbar ist. Ferner betrifft die Erfindung ein Betriebsverfahren zum Betreiben einer Getränkezubereitungsvorrichtung gemäß des Anspruchs 15.

Bei Getränkezubereitungsvorrichtungen, insbesondere Kaffeemaschinen, mit einer Einrichtung zum Erwärmen und/oder Aufschäumen von Milch müssen die mit Milch in Berührung kommenden Komponenten nach dem Bezug eines Getränks mit Milchanteil periodisch gespült werden, um ein Eintrocknen der Milch zu verhindern.

Spülvorgänge werden dabei zumeist mit Wasser aus einem Wassertank der Getränkezubereitungsvorrichtung oder von einem Frischwasseranschluss durchgeführt, wobei anschließend die Leitungen üblicherweise mit Dampf leergedrückt werden, damit bei einem nächsten Getränkebezug kein Wasser aus den Leitungen das Getränk verfälscht bzw. verwässert.

Reinigungsvorgänge werden üblicherweise mit einem speziellen Milchreiniger durchgeführt, welcher dazu geeignet ist, Milchanhaftungen zuverlässig zu lösen. Dazu wird der Milchreiniger üblicherweise in ein eignes Gefäß gegeben und bei Bedarf mit Wasser verdünnt. Die flüssige Lösung wird dann durch das Milchsystem geführt um alle Teile von Milchanhaftungen zu reinigen. Der Milchbehälter ist dabei von einer Ansaugleitung für Milch abgekoppelt, wodurch auch der einen Bestandteil der Ansaugleitung bildende Milchschlauch gereinigt werden kann, der während des normalen Betriebs in den Milchbehälter hineinragt und nach einem Milchbezug lediglich schwerkraftunterstützt leerläuft. Die im Schlauch befindliche Milch läuft dann zurück in den Milchbehälter.

Um Benutzerfehler auszuschließen, ist es vorteilhaft, Spülvorgänge der Ansaugleitung, insbesondere nach einem einstellbaren Zeitintervall wenn Spülvorgänge automatisch von der Getränkezubereitungsvorrichtung bzw. von deren Logik ausgelöst werden. Problematisch dabei ist, dass im normalen Betrieb der Milchbehälter über den Milchschlauch direkt mit der Düseneinrichtung zum Erwärmen und/oder Aufschäumen der Milch verbunden ist. Wird ein automatischer Spülvorgang von der Maschine ausgelöst und hierzu der Ansaugleitung über eine Spülleitung ein Spülmedium zugeführt, besteht die Gefahr, dass Spülmedium über das meist von einem Milchschlauch gebildete Ansaugende der Ansaugleitung in den Milchbehälter gelangt.

Um vorstehendes Problem zuverlässig zu verhindern, wird in der EP 2 196 118 B1 der Anmelderin in der Ansaugleitung eine über ein elektrisches Stellglied in Form eines Schrittmotors verfügende Ventileinrichtung vorgeschlagen, mit welcher bei einer entsprechenden Aktuierung mittels des Stellgliedes der Weg in Richtung Milchbehälter durch eine lineare oder translatorische Bewegung versperrt werden kann, so dass bei einem automatischen Spülvorgang kein Spülmedium über das Ansaugende der Ansaugleitung in den Milchbehälter gelangt.

Einfache und somit kostengünstigere Getränkezubereitungsvorrichtungen verfügen nicht über eine solche aufwendige, mit einem elektrischen Stellglied zu aktuierende Ventileinrichtung. Gleichermaßen wäre es jedoch wünschenswert, wenn auch solche Getränkezubereitungsvorrichtungen, insbesondere automatisch, d.h. selbsttätig mit Spülmedium spülbar wären ohne dass die Gefahr besteht, dass Spülmedium bis zum Ansaugende der Milchleitung und damit in das Milchbehältnis gelangt.

Aus der DE 10 2012 214 104 A1 ist ein Kaffeevollautomat bekannt, bei welchem eine Spülleitung, über welche alternativ auch Luft zuführbar ist, in eine Ansaugleitung mündet, über welche Milch in Richtung einer Düseneinrichtung ansaugbar ist. Wird über die Spülleitung Spülmedium zugeführt, so kann dies über eine in dem Dokument mit 23 bezeichnete Drossel ungehindert zum Milchbehälter strömen.

Aus der EP 2 272 408 A1 ist eine Getränkezubereitungsvorrichtung mit einem Rückschlagventil bekannt, welches bei angekoppeltem Milchansaugschlauch mechanisch blockiert und geöffnet ist.

Zum weiteren Stand der Technik werden die EP 2 695 559 A1, die DE 20 2008 016 400 U1, die EP 2 807 964 A1, die DE 10 2007 048 556 B3, die EP 2 798 989 A1, die DE 195 02 688 C1 und die EP 1 911 382 A1 genannt.

Der Erfindung liegt daher die Aufgabe zugrunde eine Getränkezubereitungsvorrichtung anzugeben, bei der in konstruktiv einfacher und kostengünstiger Weise verhindert wird, dass ungewollt, insbesondere automatisch in die Ansaugleitung gefördertes Spülmedium zu dem von der Düseneinrichtung abgewandten bzw. milchbehälterseitigen Ansaugende der Ansaugleitung für Milch und damit in einen dort vorgesehenen Milchbehälter gelangt. Ferner besteht die Aufgabe darin ein optimiertes Betriebsverfahren für eine solche Getränkezubereitungsvorrichtung, insbesondere eine Kaffeemaschine mit Milchfunktionalität anzugeben.

Diese Aufgabe wird hinsichtlich der Getränkezubereitungsvorrichtung mit den Merkmalen des Anspruchs 1 gelöst.

Hinsichtlich des Verfahrens wird die Aufgabe mit den Merkmalen des Anspruchs 15 gelöst, d.h. dadurch, dass automatisch initiiert über die Spülleitung Spülmedium, insbesondere Heißwasser und/oder Kaltwasser und/oder Dampf, in die Ansaugleitung gefördert wird und dadurch den Ventilkörper des Rückschlagventils in eine Schließrichtung druckbeaufschlagt wird, wodurch der Ventilkörper des Rückschlagventils selbsttätig dichtend mit dem Ventilsitz zusammenwirkt und ein Strömen des Spülmediums in der Ansaugleitung bis zum Ansaugende verhindert.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale auch als vorrichtungsgemäß offenbart gelten und beanspruchbar sein.

Der Erfindung liegt der Gedanke zugrunde, die Ventileinrichtung, mit der ein Einströmen von Spülmedium in einen ansaugseitigen Endabschnitt der Ansaugleitungen und damit in einen dort vorgesehenen Milchbehälter verhindert wird, als druckabhängig selbsttätig schaltendes Rückschlagventil auszubilden, wobei ein Ventilkörper des Rückschlagventils bei Beaufschlagung der Ansaugleitung mit Spülmedium über die Spülleitung zum Schließen des Rückschlagventils selbsttätig dichtend mit dem Ventilsitz zusammenwirkt bzw. zusammenwirkend angeordnet ist. Ein solches Rückschlagventil ist konstruktiv vergleichsweise einfach realisierbar und zudem kostengünstig. Hierdurch wird es erstmals ermöglicht, auch einfachere bzw. kostengünstigere Getränkezubereitungsvorrichtungen mit Milcherwärmungs- und/oder Aufschäumfunktionalität, insbesondere entsprechend ausgebildete Kaffeemaschinen wie Portioniereinheiten-, insbesondere Kapselmaschinen oder Kaffeevollautomaten mit einer derartigen Funktionalität auszustatten, wobei die Getränkezubereitungsvorrichtung dann derart ausgebildet werden kann, dass mit dieser auch automatisiert initiierte Spülvorgänge, d.h. nicht unmittelbar von einem Benutzer ausgelöste Spülvorgänge, insbesondere nach einem vorgegebenen oder einstellbaren Zeit- und/oder Bezugsintervall ausgelöst werden können, also während des normalen Betriebs, auch wenn das Ansaugende der Ansaugleitung, insbesondere einen Milchschlauch noch an einem Behälter angekoppelt bzw. in diesen hineingeführt ist. Bei Druckbeaufschlagung des Ventilkörpers durch Einleiten von Spülmedium, insbesondere Warmwasser und/oder Kaltwasser und/oder Dampf in die Ansaugleitung über die Spülleitung wird von dem selbsttätig verstellbarem Ventilkörper der Weg in eine von der Düseneinrichtung zum Aufwärmen und/oder Aufschäumen der Milch abgewandten Richtung hin zum Ansaugende versperrt, ohne dass es hierfür einer Aktuatorik zum Verstellen des Ventilkörpers bedarf.

Im Ergebnis wird also eine einfach aufgebaute Getränkezubereitungsvorrichtung mit einer Rückströmstoppfunktionalität für Spülmedium erhalten, die einfach aufgebaut und damit kostengünstig herstellbar ist und zudem ohne separate Aktuatorik durch den mittels der Druckeinrichtung erzeugten Unterdruck sicher öffenbar und gut reinigbar ist.
Unabhängig von der konkreten Ausbildung und Anordnung des den Ventilsitz aufweisenden bzw. tragenden Stellelementes ist es bevorzugt, wenn die Ansaugleitung, d.h. ein Kanalabschnitt durch dieses Stellelement hindurchgeführt ist, das Stellelement einen Durchgangskanal für Milch aufweist.

Erfindungsgemäß ist mit Vorteil vorgesehen, dass die Getränkezubereitungsvorrichtung Logikmittel aufweist, die automatisiert, insbesondere zu festgelegten oder einstellbaren Zeitpunkten und/oder nach einem festgelegten oder einstellbaren Getränkebezugsintervall bzw. Getränkebezugsanzahl einen Spülvorgang initiierend ausgebildet sind, bei welchem über die Spülleitung Spülmedium in die Ansaugleitung gefördert wird und das Rückschlagventil selbsttätig entgegen einer Ansaugrichtung für Milch schließt. Hierzu steuern die Logikmittel nach einer vorgegebenen oder einstellbaren Regel automatisch entsprechende Mittel zum Bereitstellen bzw. Fördern von Spülmedium, im Falle von Kalt- oder Heißwasser eine Pumpe und im Falle vom Dampf ggf. zusätzlich die Heizeinrichtung entsprechend an, um die Ansaugleitung über die Spülleitung in Richtung Düseneinrichtung automatisiert zu spülen, wobei ggf. von den Logikmitteln entsprechende Spülmediumfluidwege durch Ansteuerung entsprechender Ventilmittel geöffnet werden. Das Rückschlagventil schließt jedoch erfindungsgemäß selbsttätig ohne elektromotorischen Verstellantrieb. Auf diese Weise wird auch bei einfach aufgebauter Getränkezubereitungsvorrichtung eine, insbesondere regelmäßige Spülung der Ansaugleitung mit Spülmedium ermöglicht, auch wenn diese über das Ansaugleitungsende noch mit einem Milchbehälter verbunden ist.

Um insbesondere außerhalb eines automatisch initiierten Reinigungszyklus die Ansaugleitung bis zum Ansaugende spülen zu können, bevorzugt von einem zuvor geförderten, insbesondere angesaugten Reinigungsfluid befreien zu können, ist in Weiterbildung der Erfindung mit Vorteil vorgesehen, dass der Ventilsitz, mit welchem der Ventilkörper in der Schließstellung selbsttätig dichtend zusammenwirkt beweglich bzw. verstellbar angeordnet ist, und zwar zwischen einer Funktionsposition, in der der Ventilkörper in seiner Schließstellung dichtend mit dem Ventilsitz zusammenwirkt und einer, bevorzugt in einer Strömungsrichtung von Fluid durch die Ansaugleitung von der Funktionsposition beabstandeten Parkposition, in der der Ventilkörper nicht zu dichtenden Anlage an dem Ventilsitz kommt, selbst wenn er in Richtung Ansaugende, insbesondere mittels Spülmedium druckkraftbeaufschlagt wird. Wird der Ventilsitz in diese Parkposition verfahren, kann nunmehr die Ansaugleitung bis zum Ansaugende rückgespült bzw. freigespült werden. Grundsätzlich ist es denkbar, zum Verstellen des Ventilsitzes einen, insbesondere elektromotorischen Antrieb einzusetzen und/oder eine manuelle Verstellmechanik vorzusehen. Besonders bevorzugt ist es, wenn auf einen derartigen Antrieb verzichtet wird und im Sinne einer einfachen kostengünstigen Ausführung der Ventilsitz ausschließlich manuell zwischen den vorgenannten Positionen verstellbar ist.

Bevorzugt wird der Ventilsitz hierzu axial, d.h. entlang einer Geraden verstellt, insbesondere weiter in Richtung Ansaugende, d.h. weiter von dem Ventilkörper weg. Denkbar ist es jedoch auch, den Ventilsitz zum Verstellen in die Parkposition in Richtung Ventilkörper zu verstellen, insbesondere derart, dass der Ventilsitz den, wie später noch erläutert werden wird bevorzugt als Ventilklappe ausgebildeten Ventilkörper verstellt und somit derart positioniert bzw. kraftbeaufschlagt, dass der Ventilkörper bei Druckbeaufschlagung mit Spülmedium in Richtung Ansaugende nicht zur dichtenden Anlage an dem Ventilsitz gelangen kann.

Wie bereits erwähnt ist es grundsätzlich denkbar einen, insbesondere elektromotorischen Antrieb zum Verstellen eines den Ventilsitz aufweisenden Bauteils vorzusehen. Bevorzugt, insbesondere für den beabsichtigten Einsatz in kostengünstigeren bzw. einfacher konstruierten Getränkezubereitungsvorrichtungen ist es jedoch von Vorteil, wenn eine, insbesondere ausschließlich manuelle Verstellung des Ventilsitzes realisiert ist, also bewusst auf einen solchen vorgenannten Aktuator verzichtet wird. Hierfür ist es besonders zweckmäßig, wenn dem Ventilsitz, bevorzugt an einem dem Ventilsitz aufweisenden Bauteil eine Grifffläche zum manuellen Greifen und Verstellen zugeordnet ist.

Im Hinblick auf die relative Anordnung der Funktionsposition und der Parkposition zueinander gibt es unterschiedliche Möglichkeiten. Ganz besonders bevorzugt ist eine Ausführungsform, bei der die Funktionsposition in einer Ansaugrichtung der Milch von der Parkposition beabstandet ist. Besonders zweckmäßig ist es dabei, wenn sich die Funktionsposition des Ventilsitzes näher am Ansaugende befindet als die Parkposition, wobei auch, wie zuvor bereits angedeutet, eine gegenteilige Anordnung möglich ist, also die Parkposition weiter vom Ansaugende weg befindet als die Funktionsposition.

Wie später noch erläutert werden wird, ist es besonders zweckmäßig, wenn der Ventilsitz als verschwenkbare, insbesondere als Elastomerteil bzw. Elastomermembran ausgebildete Ventilklappe ausgebildet ist. In diesem Fall ist die Realisierung einer Parkposition, in der der Ventilkörper bzw. die Ventilklappe nicht mehr dichtend mit dem Ventilsitz zusammenwirken kann, vergleichsweise einfach realisierbar, insbesondere durch translatorisches Verstellen. Insbesondere für den Fall, dass der Ventilkörper als vollständig relativ zu einem Ventilgehäuse verstellbarer (d.h. nicht gehäusefester) Ventilkörper, beispielsweise als Ventilkugel oder Ventilzylinder ausgebildet ist, hat es sich als vorteilhaft herausgestellt, dem Ventilkörper einen, insbesondere als Axialanschlag ausgebildeten Anschlag zuzuordnen, der derart ausgebildet und angeordnet ist, dass der Ventilkörper bei in der Parkposition befindlichem Ventilsitz mit dem Anschlag zusammenwirkt bzw. gegen diesen anschlägt und auf diese Weise vor dem Erreichen der Parkposition des Ventilsitzes gehindert wird, wobei der Anschlag so ausgebildet und angeordnet sein muss, dass er ein Durchströmen von Spülmedium bei an dem Anschlag anliegendem Ventilkörper hin zum Ansaugende durch den Ventilsitz hindurch ermöglicht. Bevorzugt ist der Ventilkörper wenn dieser an dem Anschlag anliegt, von Spülmedium entgegen der Ansaugrichtung von Milch umströmbar. Für den Fall, dass anstelle einer Ventilklappe, insbesondere einer Elastomermembran ein Ventilkörper in Form eines vollständig relativ zu dem Ventilgehäuse bewegliches insbesondere festes Teil verwendet wird ist es bevorzugt, wenn dieser Ventilkörper in Richtung seiner Schließstellung, d.h. insbesondere in Richtung Ansaugende federkraftbelastet ist, so dass Milch in einem Milchaufschäum- und/oder Erwärmungsbetriebszustand entgegen der Federkraft, die den Ventilkörper in Richtung seiner Schließstellung beaufschlagt angesaugt werden muss. Folglich muss die Feder dann so ausgelegt bzw. dimensioniert sein, dass der Saugdruck ausreicht, um das Rückschlagventil sicher zu öffnen.

Eine besonders bevorzugte Möglichkeit zur Realisierung einer Verstellmechanik des Ventilsitzes besteht darin, diesen, genauer das den Ventilsitz tragende Bauteil, insbesondere um seine Längsachse, rotierbar anzuordnen und dem Ventilsitz, genauer dem Ventilsitzbauteil Kulissenmittel zur Umwandlung einer Rotationsbewegung in eine Verstellbewegung relativ zu der Ventilklappe zum Verstellen des Ventilsitzes zwischen der Funktionsposition und der Parkposition zugeordnet sind. Anders ausgedrückt kann der Ventilsitz über eine Drehbewegung und eine Steuerkurve auf die Ventilklappe zu oder von dieser weg bewegt werden, insbesondere derart verstellt werden, dass das Rückschlagventil dann in seiner Parkposition in beide Richtungen durchlässig ist.

Vorgenannte Ausführungsform ist besonders vorteilhaft während einer Reinigung. Der Milchbehälter wird dann durch einen Behälter mit Reinigungsflüssigkeit ersetzt. In einer ersten Reinigungsphase wird die Reinigungsflüssigkeit angesaugt, insbesondere mittels des über die Düseneinrichtung erzeugten Unterdrucks, um somit Milchanhaftungen an den kontaminierten Teilen bzw. innerhalb der Ansaugleitung zu entfernen. Nach einer solchen Reinigungsphase müssen dann die mit der Reinigungsflüssigkeit in Berührung gekommenen Teile wieder gespült werden. Dies kann beispielsweise mit kaltem Wasser aus einem Wassertank oder von einem Festwasseranschluss oder mit Heißwasser erfolgen. Das Spülwasser tritt dabei zum Teil am Auslass der Düseneinrichtung aus und teilweise am Ansaugende der Ansaugleitung, insbesondere in einen Behälter, in dem sich zuvor die Reinigungsflüssigkeit befunden hat. Zusätzlich oder alternativ kann als Spülmedium Dampf "rückwärts" durch das Rückschlagventil gefördert werden, insbesondere um das von einem vorhergehenden Spülvorgang mit Spülwasser verbleibende Restwasser herauszudrücken.

Ganz besonders bevorzugt ist eine Ausführungsform, bei der der Ventilkörper als verschwenkbar angeordnete, insbesondere biegbar ausgebildete Ventilklappe ausgebildet ist. Besonders zweckmäßig ist es dabei, die Ventilklappe einenends ortsfest, insbesondere ventilgehäusefest anzuordnen, so dass das gegenüberliegende Ende ein freies Ende ist und einen maximalen Schwenkweg zurücklegen kann.

Dabei liegt der speziellen Ausbildung des Rückschlagventils mit einer verschwenkbar angeordneten Ventilklappe eine Überlegung bzw. Erkenntnis zugrunde, die bei bisherigen bekannten und aufwendigen Ausführungsvarianten mit Stellmotor keine Rolle gespielt hat. So ist der Saugdruck, der zum Ansaugen von Milch über die Ansaugleitung mittels der Düseneinrichtung durch Fördern von Dampf durch eine Venturidüse der Düseneinrichtung erzeugt wird vergleichsweise gering, so dass für eine selbsttätige Verstellung des Ventilkörpers des Rückschlagventils sichergestellt werden muss, dass dieser bei einem Ansaug-, d.h. Milcherwärmungs- und/oder Aufschäumvorgang sicher öffnet, um den Weg für Milch von dem Ansaugende der Ansaugleitung über das Rückschlagventil und die restliche Ansaugleitung zur Düseneinrichtung freizuschalten. Durch die spezielle Ausbildung des Ventilkörpers als selbsttätig verschwenkbar angeordnete Ventilklappe wird diese Forderung erfüllt, da die notwendigen Bewegungs- bzw. Öffnungskräfte einer solchen verschwenkbar angeordneten Ventilklappe sehr gering sind. Ein weiterer Vorteil einer verschwenkbar angeordneten Ventilklappe als Ventilkörper besteht in der guten bzw. automatisierbaren Reinigbarkeit. Dabei ist die Ventilklappe bevorzugt einenends gelenkig angeordnet und/oder ausgebildet (insbesondere biegbar), bevorzugt handelt es sich dabei um ein gehäusefestes Ende, während das der gelenkigen Ausbildung bzw. Anordnung gegenüberliegende Ende bevorzugt als freies Ende ausgebildet ist. Eine solche Ventilklappe ist mit besonders wenig Kraftaufwand verschwenkbar und kann bei geöffnetem Rückschlagventil seitlich umströmt werden.

Um eine Verschwenkung der Ventilklappe zwischen Ihrer Schließposition und einer Öffnungsposition optimiert und vorzugsweise mit geringer Betätigungskraft zu ermöglichen, ist in Weiterbildung der Erfindung vorgesehen, dass die Ventilklappe an einem stationären Bauteil der Getränkezubereitungsvorrichtung, insbesondere an einem Rückschlagventilgehäuse verschwenkbar festgelegt ist, insbesondere Biegegelenkmittel, welche wie später noch erläutert werden wird, in einer ganz besonders bevorzugten Ausführungsform unmittelbar von der dann als Elastomerteil ausgebildeten Rückschlagklappe (Ventilklappe) gebildet sind.

Ganz besonders bevorzugt ist eine Ausführungsform, bei der der Ventilklappe keine von der Ventilklappe separaten Rückstellfedermittel zugeordnet sind - falls etwaige Rückstellkräfte bereitgestellt werden sollen, werden diese bevorzugt aus der Formgebung und/oder der Materialwahl der Ventilklappe von dieser selbst erzeugt. Bevorzugt ist das Rückschlagventil in der Art eines Flatterventils ausgebildet.

Besonders zweckmäßig ist es nun, die Ventilklappe elastisch verformbar auszubilden, so dass die Verschwenkbewegung der Ventilklappe als Biegebewegung und damit Verformbewegung der Ventilklappe realisiert ist. Bevorzugt ist die Ventilklappe hierzu, vorzugsweise vollständig, aus Elastomermaterial, d.h. als Elastomerteil ausgebildet, beispielsweise aus Silikon. Ganz besonders bevorzugt ist es dabei, wenn das Elastomerteil plättchenförmig, also als Elastomerplättchen ausgeformt ist. Besonders zweckmäßig ist die Klappe hierzu als elastische Membran ausgebildet.

Zur Fixierung der Ventilklappe hat es sich als vorteilhaft herausgestellt, wenn diese mit einem Klemmabschnitt verbunden ist, mit dem die Ventilklappe zwischen zwei stationären Bauteilen der Getränkezubereitungsvorrichtung, insbesondere zwei Rückschlagventilgehäusen, klemmend festgelegt ist. Dabei ist eine Ausführungsform von besonderem Vorteil, bei der der vorerwähnte Klemmabschnitt und die Ventilklappe als einstückiges Bauteil, insbesondere Elastomerteil ausgebildet sind. Gemäß einer ganz besonders bevorzugten Ausführungsvariante ist der Klemmabschnitt als Ringabschnitt bzw. Dichtabschnitt ausgebildet, der die Verbindung aus den zwei stationären Bauteilen, insbesondere den Rückschlagventilgehäuseteilen abdichtet, wobei von den Bauteilen bevorzugt ein die Ventilklappe aufnehmender Ventilraum begrenzt ist. Anders ausgedrückt kommt dem Klemmabschnitt bevorzugt eine Doppelfunktion zu - einerseits sorgt er für eine insbesondere gehäusefeste Fixierung der Ventilklappe und darüber hinaus dient er als Dichtung zur Abdichtung des Ventilgehäuses nach außen. Ganz besonders bevorzugt ist der vorerwähnte Ring- bzw. Dichtabschnitt ausschließlich über einen Biegeabschnitt mit der eigentlichen Ventilklappe verbunden - in Umfangsrichtung benachbart zu diesem Biegeabschnitt ist der Ringabschnitt bevorzugt in radialer Richtung zur Ventilklappe beabstandet angeordnet, um somit ausreichend Raum für eine Umströmung der Ventilklappe bei geöffnetem Rückschlagventil bereitzustellen.

Konstruktiv von besonderem Vorteil ist eine Ausführungsform, bei der das Rückschlagventil als Modul ausgebildet ist, welches, insbesondere lösbar, jedenfalls dichtend mit der restlichen Getränkezubereitungsvorrichtung durch Festlegung an einer Modulaufnahme verbunden bzw. verbindbar ist. Das Rückschlagventil umfasst zwei miteinander, bevorzugt lösbar verbundene, beispielsweise verrastbare Gehäuseteile, die noch weiter bevorzugt zwischen sich als Dichtung den vorerwähnten Klemmabschnitt einer Ventiklappe aufnehmen. Jedenfalls begrenzen die miteinander verbundenen Gehäuseteile (insbesondere Gehäuseschalen) einen Ventilraum mit darin angeordnetem Ventilkörper. Alternativ ist es auch denkbar, den Modulgedanken mit einem herkömmlichen, frei verstellbaren Ventilkörper zu realisieren, wobei dann bevorzugt vorgenannter Ventilraum neben dem Ventilkörper eine Rückstellfeder beinhaltet.

Im Hinblick auf die Anordnung der Spülleitung relativ zur Ansaugleitung ist es bevorzugt, wenn die Spülleitung in einem Bereich zwischen dem Rückschlagventil und der Düseneinrichtung in die Ansaugleitung mündet, wobei es noch weiter bevorzugt ist, wenn die Spülleitung hierzu zu dem Rückschlagventil bzw. dem Ventilkörper beabstandet angeordnet ist.

Die Spülleitung ist derart mit weiteren Komponenten der Getränkezubereitungsvorrichtung verbunden, dass das entsprechende Spülmedium, insbesondere automatisch initiiert bereitgestellt bzw. über die Spülleitung zuführbar ist. Für den Fall von Heißwasser als Spülmedium ist die Spülleitung bevorzugt mit dem Ausgang mindestens einer Heizeinrichtung verbunden und/oder über entsprechende Ventilmittel verbindbar, ebenso, wenn als Spülmedium Dampf eingesetzt wird, wobei dieser vorzugsweise in einem zweiten Spülschritt bereitgestellt wird, um noch in der Ansaugleitung vorhandenes kaltes oder erwärmtes Spülwasser herauszudrücken. In sämtlichen Fällen ist der Spülleitung bevorzugt eine Pumpe zugeordnet, mit der Wasser entweder über die Heizeinrichtung oder unter Umgehung dieser zur Spülleitung förderbar ist. Besonders zweckmäßig ist eine Ausführungsform, bei der der Spülleitung nicht nur die vorerwähnte Spülfunktion zukommt, sondern bei der die Spülleitung in Abhängigkeit der Ventilstellung von Ventilmitteln in einem entsprechenden Betriebszustand der Getränkezubereitungsvorrichtung die Funktion einer Luftleitung übernimmt, über welche Luft, insbesondere mittels des mit der Düseneinrichtung erzeugbaren Unterdrucks ansaugbar ist, um diese Luft mit der angesaugten Milch zu mischen und das Luft-Milchgemisch mittels der Düseneinrichtung aufzuschäumen. Hierzu sind die vorgenannten Ventilmittel mit entsprechenden Logikmitteln verbunden bzw. ansteuerbar.

Alternativ ist es möglich, dass zusätzlich zu der Spülleitung eine separat von der Spülleitung in die Ansaugleitung mündende Luftleitung vorgesehen ist und dann der Spülleitung bevorzugt keine Luftleitungsfunktion zukommt.

Besonders zweckmäßig ist eine Ausführungsform, bei der die Ansaugleitung in einem Bereich auf der von der Düseneinrichtung abgewandten Seite bzw. Ansaugseite des Rückschlagventils einen flexiblen, insbesondere lösbar fixierten Schlauch umfasst, wobei es noch weiter bevorzugt ist, wenn dieser Schlauch bis zum Ende der Ansaugleitung reicht bzw. das Ansaugende bildet.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: eine geschnittene Ansicht einer Milch-Erwärmungs- und Aufschäumeinrichtung/-anordnung einer Getränkezubereitungsvorrichtung, insbesondere einer Kaffeemaschine,
- Fig. 2:: in einer Explosionsdarstellung eine bevorzugte Ausführungsform des im Rahmen der Anordnung zum Einsatz kommenden Rückschlagventils,
- Fig. 3a und 3b:: eine alternative Ausführungsform eines Rückschlagventils mit in unterschiedliche Relativpositionen zu einer Ventilklappe verstelltem Ventilsitz, und
- Fig. 4, 4a und 4b:: eine relative Ausführungsform eines im Rahmen der Erfindung zum Einsatz kommenden Rückschlagventils vollständig relativ zu einem Gehäuse verstellbaren Ventilkörper, wobei in Fig. 4a ein Ventilsitz sich in seiner Funktionsposition befindet und in Fig. 4b in seiner Parkposition, wobei wenn sich der Ventilsitz in seiner Parkposition befindet der Ventilkörper an einem Anschlag anliegt und somit nicht gegen den Ventilsitz verstellbar ist.

In den Figuren sind gleiche Elemente und Elemente mit der gleichen Funktion mit den gleichen Bezugszeichen gekennzeichnet.

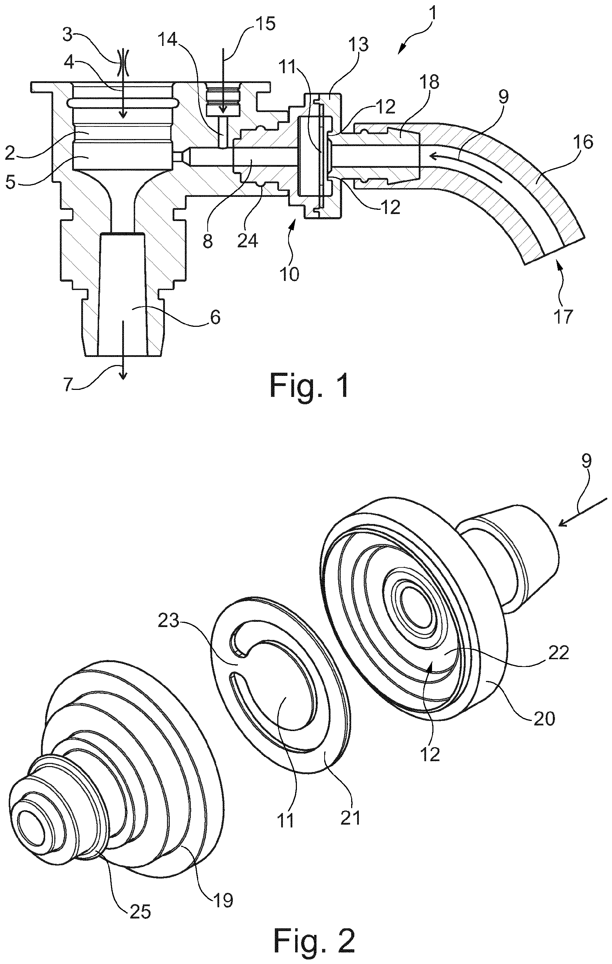

In Fig. 1 ist ein Ausschnitt einer Getränkezubereitungsvorrichtung 1 gezeigt, mit welcher Milch erwärmt und aufgeschäumt werden kann. Zusätzlich ist die Getränkezubereitungsvorrichtung zur Herstellung eines Kaffeegetränks ausgebildet, wobei die erwärmte Milch oder der Milchschaum dem Kaffeegetränk zur Herstellung unterschiedlicher Kaffeegetränkearte beifügbar ist.

Zu erkennen ist jedenfalls eine Düseneinrichtung 2, umfassend eine Venturidüse 3, die dampfleitend mit einer zum Erzeugen von Dampf ausgebildeten, nicht dargestellten Heizeinrichtung, insbesondere einem Durchlauferhitzer verbunden ist. Über die Venturidüse 3 strömt Dampf 4 in eine Mischkammer 5, hier eine Aufschäumkammer, in der Milch mit dem Dampf vermischt wird und die Milch, wenn dieser zuvor, wie später noch erläutert werden wird, Luft zugeführt wird bzw. wurde aufgeschäumt wird. Die erwärmte und/oder aufgeschäumte Milch 7 verlässt dann die Düseneinrichtung 2 über einen Auslass 6.

In die Mischkammer 5 mündet eine Ansaugleitung 8 für kalte Milch 9, über die Milch aus einem nicht dargestellten Behältnis ansaugbar ist, und zwar über den mittels der Venturidüse 3 bei Durchströmung mit Dampf 4 erzeugtem Unterdruck.

In die Ansaugleitung 8 ist ein druckabhängig selbstständig schaltendes Rückschlagventil 10 integriert, umfassend einen Ventilkörper, der als Ventilklappe 11, die in einer Schließstellung bei Beaufschlagung der Ventilklappe 11 entgegen einer Ansaugrichtung für kalte Milch dichtend mit einem Ventilsitz 12 zusammenwirkt. Die Ventilklappe 11 ist als Elastomermembran bzw. Elastomerplättchen ausgebildet und elastisch verbiegbar. Die Ventilklappe 11 ist gehäusefest an einem, hier zweiteiligen Rückschlagventilgehäuse 13 festgelegt. Wird Milch 9 über den vorerwähnten Unterdruck in einer Ansaugrichtung angesaugt, wirkt jedenfalls die Ventilklappe 11 nicht dichtend mit dem Ventilsitz 12 zusammen und Milch 9 kann in die Mischkammer 5 strömen.

In einem Bereich zwischen dem Rückschlagventil 10 bzw. der Ventilklappe 11 und der Mischkammer 9 mündet in die Ansaugleitung 8 eine Spülleitung 14, über welche Spülmedium 15, insbesondere Wasser und/oder Dampf in die Ansaugleitung 8 gefördert wird. Das Rückschlagventil 10 verhindert nun durch dichtendes Zusammenwirken mit der biegbaren Ventilklappe 11 in ihrer Schließstellung, dass Spülmedium durch das Rückschlagventil 10 bis zu einem, hier von einem flexiblen Schlauch 16 gebildeten Ansaugende 17 der Ansaugleitung 8 gelangt. Zu erkennen ist, dass der flexible Schlauch 16 lösbar an der Getränkezubereitungsvorrichtung 1 fixiert ist, genauer an einem Anschlussnippel 18 des Rückschlagventils 10 bzw. des Rückschlagventilgehäuses 13.

Die Spülleitung 15 hat bei der Ausführungsform gemäß Fig. 1 in einem Milchaufschäumbetriebszustand die Funktion einer Luftleitung, d.h. es kann Luft über die Spülleitung 15 angesaugt und der Milch 8 beigemischt werden, um somit in der Mischkammer 5 durch Beimischung von Dampf Milchschaum erzeugen zu können.

Das Rückschlagventil 10 ist modulartig aufgebaut und umfasst, wie in Fig. 2 gezeigt ist zwei aneinander fixierbare, insbesondere miteinander verrastbare Gehäuseteile 19, 20, die zwischen sich einen Klemmabschnitt 21 aufnehmen, mit welchem die Elastomer-Ventilklappe 11 gehäusefest anordenbar ist. Der Klemmabschnitt 21 dient gleichzeitig als Dichtung zur Abdichtung des Rückschlagventilgehäuses bzw. des von diesem umschlossenen Ventilraums 22 nach außen. Wie aus Fig. 2 zu erkennen ist, umschließt der Klemmabschnitt 21 die eigentliche Ventilklappe 11 mit Radialabstand und ist über Biegegelenkmittel 23 bzw. einen Biegeabschnitt mit der Ventilklappe 11 verbunden. Biegegelenkmittel (Biegeabschnitt) 23, Klemmabschnitt 21 und Ventilplättchen sind als einteiliges Elastomerbauteil bzw. Elastomerplättchen ausgebildet. Den Biegeabschnittmitteln 23 gegenüberliegend weist die Ventilklappe ein freies Ende auf.

Zur dichtenden, insbesondere lösbaren Verbindung des modulartigen Rückschlagventils 10 mit einer Modulaufnahme 24 (vgl. Fig. 1) ist eine als O-Ringdichtung ausgebildete Ringdichtung 25 vorgesehen, die gleichzeitig für eine gewisse reib- und formschlüssige Arretierung in der Modulaufnahme 24 Sorge trägt.

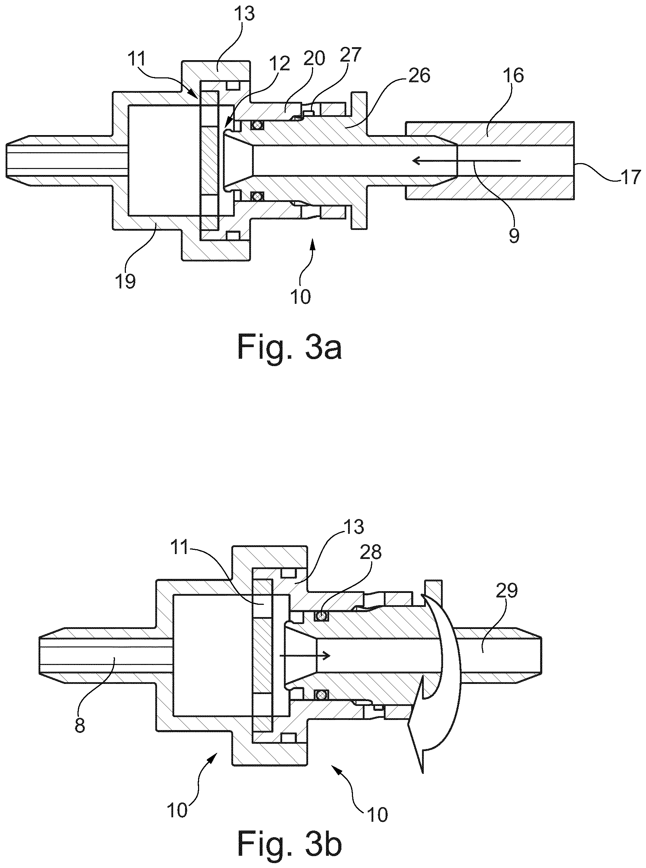

In den Fig. 3a und 3b ist ein ebenfalls modulartig aufgebautes, alternatives Rückschlagventil für die Integration in einer Getränkezubereitungsvorrichtung 1 gemäß Fig. 1 gezeigt. Der grundsätzliche Aufbau entspricht dem zuvor beschriebenen Aufbau. Zusätzlich hat das Rückschlagventil 10 gemäß den Fig. 3a und 3b eine Verstellfunktionalität zum Einstellen des Abstandes des Ventilsitzes 12 zur Ventilklappe 11. Aufgrund der ansonsten gleichen Funktionsweise wird im Folgenden im Wesentlichen auf die Unterschiede zu dem zuvor beschriebenen Ausführungsbeispiel eingegangen, um Wiederholungen zu vermeiden. Im Hinblick auf die Gemeinsamkeiten wird auf das vorstehende Ausführungsbeispiel verwiesen.

In dem Gehäuseteil 20 ist ein Stellelement 26 rotierbar angeordnet, an dem endseitig auf der der Ventilklappe 11 zugewandten Seite der Ventilsitz 12 ausgebildet ist. Über eine im Gehäusebauteil 20 ausgebildete Kulissenführung 27 wird die Rotationsbewegung des Stellelementes 26 in eine axiale Bewegung des Stellelementes 26 zusammen mit dem Ventilsitz 12 ausgebildet, so dass der Ventilsitz 12 zwischen der in Fig. 3a gezeigten Funktionsposition, in der die Ventilklappe 11 bei entsprechender Druckbeaufschlagung dichtend mit dem Ventilsitz 12 zusammenwirken kann und in der in Fig. 3 gezeigten Parkposition, in der ein derartiges dichtendes Zusammenwirken nicht möglich ist und folglich das Rückschlagventil 10 rückwärts, d.h. entgegen einer Ansaugrichtung durchströmbar ist, verstellbar ist.

Das Stellelement 26 ist über eine randseitige Ringdichtung 28 gegenüber dem Rückschlagventilgehäuse 13 abgedichtet und das Stellelement 26 weist in seinem Inneren einen Kanalabschnitt 29 als Teil der Ansaugleitung 8 auf.

In der Funktionsposition gemäß Fig. 3a kann automatisch initiiert die Ansaugleitung 8 gespült werden und die Ventilklappe 11 schließt selbsttätig bzw. wirkt selbsttätig mit dem Ventilsitz 12 zusammen, so dass kein Spülmedium in Richtung Ansaugende 17 strömen kann. Für einen manuellen Freispülschritt, bei dem auch das Ansaugende 17 mit Spülmedium beaufschlagt werden soll, kann dann der Ventilsitz 12, hier beispielhaft durch manuelles Verdrehen des Stellelementes 26 axial relativ zu der Ventilklappe 11 verstellt werden und der Strömungsweg entgegen der Ansaugrichtung ist offen.

Das Stellelement 26 stellt in bevorzugter Weise gleichzeitig einen Adapter zum Anschluss des flexiblen Schlauches 16 zum Ansaugen von Milch dar.

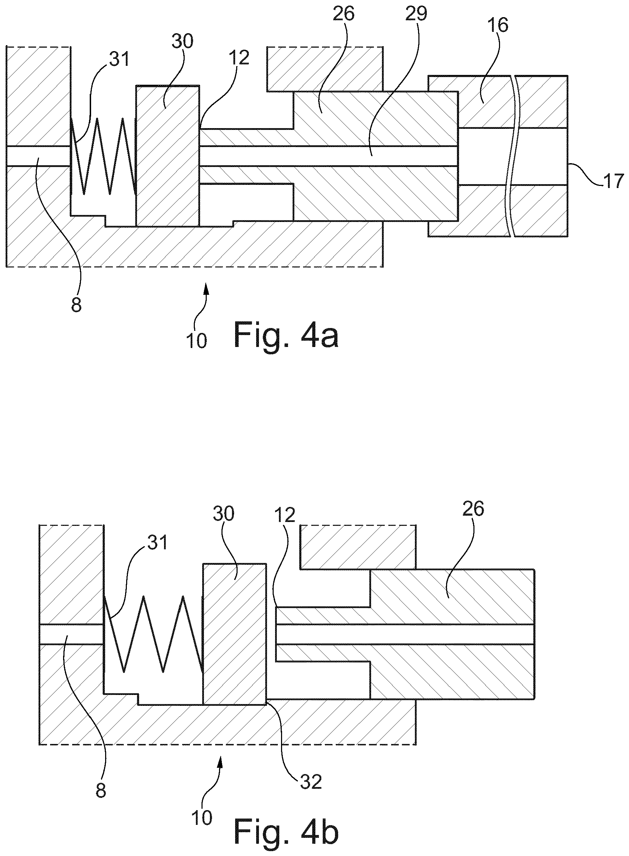

In den Fig. 4a und 4b ist eine alternative Ausführungsvariante eines Rückschlagventils 10 für eine Getränkezubereitungsvorrichtung zur Integration in die Ansaugleitung 8 gezeigt.

Zu erkennen ist ein selbsttätig schaltend angeordneter, axial bzw. translatorisch verstellbarer Ventilkörper, hier in Form eines zylindrischen Ventilelementes 30, welches mit Hilfe von Federmitteln 31, die sich axial an dem Ventilelement 30 abstützen in Richtung eines Ansaugendes 7 bzw. hin zu einem Ventilsitz 12 federkraftbeaufschlagt ist. In Fig. 4a befindet sich der Ventilsitz 12, der an einem axial verstellbaren Stellelement 26 angeordnet ist in seiner Funktionsposition. Der Ventilsitz 12 bzw. das Stellelement 26 ist zwischen dieser Funktionsposition in eine in Fig. 4b gezeigte Parkposition verstellbar. In der Funktionsposition kann der Ventilkörper 30 dichtend an dem Ventilsitz 12 anliegen, hier lediglich beispielhaft federkraftunterstützt. Jedenfalls bei Druckbeaufschlagung mit Spülmedium in der Ansaugleitung 8.

Die Parkposition des Ventilsitzes 12 ist so gewählt, dass das Ventilelement 30 vor Erreichen des Ventilsitzes 12 an einem Anschlag 32 anstößt bzw. anliegt und Spülmedium auf diese Weise zu Rückspülzwecken bis zum Ansaugende 17 gelangen kann.

Im Hinblick auf die konkrete Realisierung der Verstellbewegung zwischen der Funktionsposition und der Parkposition gibt es unterschiedliche Möglichkeiten. Auch bei dem Rückschlagventil 10 gemäß den Fig. 4a und 4b ist eine Steuerkurvenmechanik realisierbar, wie bei dem Ausführungsbeispiel gemäß den Fig. 3a und 3b. Alternativ ist es denkbar eine manuelle oder aktuatorische axiale Verstellbewegung, insbesondere zwischen entsprechenden Anschlägen zu realisieren.

### Bezugszeichen

- 1: Getränkezubereitungsvorrichtung
- 2: Düseneinrichtung
- 3: Venturidüse
- 4: Dampf
- 5: Mischkammer
- 6: Auslass
- 7: erwärmte und/oder aufgeschäumte Milch
- 8: Ansaugleitung
- 9: kalte Milch
- 10: Rückschlagventil
- 11: Ventilklappe
- 12: Ventilsitz
- 13: Rückschlagventilgehäuse
- 14: Spülleitung
- 15: Spülmedium
- 16: flexibler Schlauch
- 17: Ansaugende der Ansaugleitung
- 18: Anschlussnippel
- 19: Gehäuseteil
- 20: Gehäuseteil
- 21: Klemmabschnitt
- 22: Ventilraum
- 23: Biegegelenkabschnitt
- 24: Modulaufnahme
- 25: Ringdichtung
- 26: Stellelement mit Ventilsitz
- 27: Kulissenmittel
- 28: Ringdichtung
- 29: Kanalabschnitt
- 30: Ventilelement
- 31: Federmittel
- 32: Anschlag

## Patentansprüche

1. Getränkezubereitungsvorrichtung (1), insbesondere Kaffeemaschine, mit einer Heizeinrichtung zur Dampferzeugung, mit einer fluidleitend mit der Heizeinrichtung verbundenen Düseneinrichtung (2) zum Erwärmen und/oder Aufschäumen von Milch (7) mittels Dampf, (4) wobei mit der Düseneinrichtung (2) bei Dampfbeaufschlagung ein Unterdruck erzeugbar ist, mit welchem über eine fluid leitend mit der Düseneinrichtung (2) verbundene und über eine Spülleitung (14) mit einem Spülmedium (15) beaufschlagbare Ansaugleitung Milch (9) ansaugbar ist, und wobei zwischen einem Ansaugende (17) der Ansaugleitung und der Düseneinrichtung (2) eine einen verstellbaren Ventilkörper aufweisende Ventileinrichtung angeordnet ist, die in einer Schließstellung ein Strömen von Spülmedium (15) aus der Spülleitung (14) zum Ansaugende (17) der Ansaugleitung verhindernd ausgebildet ist, wobei die Ventileinrichtung als druckabhängig selbsttätig schaltendes Rückschlagventil (10) ausgebildet ist, dessen Ventilkörper bei Beaufschlagung der Ansaugleitung mit Spülmedium (15) über die Spülleitung (14) zum Schließen des Rückschlagventils (10) selbsttätig dichtend mit dem Ventilsitz (12) zusammenwirkt,
**gekennzeichnet durch**
Logikmittel, die automatisiert, insbesondere in einem festgelegten oder einstellbaren Zeitintervall und/oder nach einem festgelegten oder einstellbaren Getränkebezugsintervall einen Spülvorgang initiierend ausgebildet sind, bei welchem über die Spülleitung (14) Spülmedium (15) in die Ansaugleitung gefördert wird und das Rückschlagventil (10) selbsttätig schließt.

2. Getränkezubereitungsvorrichtung nach Anspruch 1,
**dadurch gekennzeichnet,**
**dass** der Ventilsitz (12), mit welchem der Ventilkörper in der Schließstellung selbsttätig dichtend zusammenwirkt, zwischen einer Funktionsposition, in der der Ventilkörper in seiner Schließstellung dichtend mit dem Ventilsitz (12) zusammenwirkt, und einer Parkposition verstellbar ist, in der der Ventilkörper bei Beaufschlagung der Ansaugleitung mit Spülmedium (15) über die Spülleitung (14) nicht dichtend mit dem Ventilsitz (12) zusammenwirken kann, um eine Rückspülung der Ansaugleitung mit Spülmedium (15) bis zum Ansaugende (17) zu ermöglichen.

3. Getränkezubereitungsvorrichtung nach Anspruch 2,
**dadurch gekennzeichnet,**
**dass** dem Ventilsitz (12), insbesondere an einem den Ventilsitz (12) aufweisenden Stellelement (26) eine Grifffläche zum, bevorzugt ausschließlich, manuellen Verstellen zwischen der Funktionsposition und der Parkposition zugeordnet ist, und/oder dass der Ventilsitz (12) zum Verstellen zwischen der Funktionsposition und der Parkposition mit einem, insbesondere elektromotorischer, Antrieb wirkverbunden ist.

4. Getränkezubereitungsvorrichtung nach einem der Ansprüche 2 oder 3,
**dadurch gekennzeichnet,**
**dass** die Funktionsposition bevorzugt in einer Ansaugrichtung der Milch (9) von der Parkposition beabstandet ist.

5. Getränkezubereitungsvorrichtung nach einem der Ansprüche 2 bis 4,
**dadurch gekennzeichnet,**
**dass** der Ventilsitz (12) beim Verstellen von der Parkposition in die Funktionsposition entgegen der Ansaugrichtung verstellbar ist oder dass der Ventilsitz (12) beim Verstellen von der Parkposition in die Funktionsposition in Ansaugrichtung verstellbar ist, insbesondere derart, dass der Ventilsitz (12) und/oder ein den Ventilsitz (12) aufweisendes Bauteil gegen den Ventilkörper verstellbar ist und diesen derart bewegt und/oder kraftbeaufschlagt, dass der Ventilkörper bei Beaufschlagung der Ansaugleitung mit Spülmedium (15) über die Spülleitung (14) nicht zur dichtenden Anlage an dem Ventilsitz (12) kommen kann.

6. Getränkezubereitungsvorrichtung nach einem der Ansprüche 2 bis 5,
**dadurch gekennzeichnet,**
**dass** dem Ventilkörper ein Anschlag zugeordnet ist, an dem der Ventilkörper bei in der Parkposition befindlichem Ventilsitz (12), insbesondere mit Abstand zu dem Ventilsitz (12), bei Beaufschlagung der Ansaugleitung mit Spülmedium (15) über die Spülleitung (14) anliegt.

7. Getränkezubereitungsvorrichtung nach einem der Ansprüche 2 bis 6,
**dadurch gekennzeichnet,**
**dass** der Ventilsitz (12), insbesondere um seine Längsachse, rotierbar angeordnet ist und dass dem Ventilsitz (12) Kulissenmittel (27) zur Umwandlung seiner Rotationsbewegung in eine, insbesondere translatorische, Verstellbewegung relativ zu der Ventilklappe (11) zum Verstellen des Ventilsitzes (12) zwischen der Funktionsposition und der Parkposition zugeordnet sind.

8. Getränkezubereitungsvorrichtung nach einem der vorhergehenden Ansprüche,
**dadurch gekennzeichnet,**
**dass** der Ventilkörper als relativ zu dem Ventilsitz (12) verschwenkbare Ventilklappe (11) ausgebildet ist.

9. Getränkezubereitungsvorrichtung nach Anspruch 8,
**dadurch gekennzeichnet,**
**dass** die Ventilklappe (11) an einem stationären Bauteil der Getränkezubereitungsvorrichtung (1), insbesondere an einem Rückschlagventilgehäuse (13), bevorzugt einends, verschwenkbar festgelegt ist.

10. Getränkezubereitungsvorrichtung nach einem der Ansprüche 8 oder 9,
**dadurch gekennzeichnet,**
**dass** die, bevorzugt als, insbesondere plättchenförmiges, Elastormerteil ausgebildete, Ventilklappe (11) elastisch verformbar ausgebildet und durch Biegen zwischen einer Öffnungsstellung und der Schließstellung verstellbar ist.

11. Getränkezubereitungsvorrichtung nach einem der Ansprüche 8 bis 10,
**dadurch gekennzeichnet,**
**dass** die Ventilklappe (11), bevorzugt einstückig, mit einem, bevorzugt ringförmigen, Klemmabschnitt (21) verbunden ist, mit dem die Ventilklappe (11) zwischen zwei stationären Bauteilen der Getränkezubereitungsvorrichtung (1), insbesondere zwei Rückschlagventilgehäusen (13), klemmend festgelegt ist.

12. Getränkezubereitungsvorrichtung nach einem der vorhergehenden Ansprüche,
**dadurch gekennzeichnet,**
**dass** das Rückschlagventil (10) zwei miteinander, bevorzugt lösbar verbundene, insbesondere verrastete Gehäuseteile (19, 20) aufweist, die einen Ventilraum (22) mit darin angeordneter Ventilklappe (11) begrenzen, welches dichtend, insbesondere lösbar, an einer Modulaufnahme (24) des Getränkezubereitungsvorrichtung (1) festgelegt ist.

13. Getränkezubereitungsvorrichtung nach einem der vorhergehenden Ansprüche,
**dadurch gekennzeichnet,**
**dass** die Spülleitung (14) in einem Bereich zwischen dem Rückschlagventil (10) und der Düseneinrichtung (2) in die Ansaugleitung, bevorzugt beabstandet zum Rückschlagventil (10), mündet.

14. Getränkezubereitungsvorrichtung nach einem der vorhergehenden Ansprüche,
**dadurch gekennzeichnet,**
**dass** die Spülleitung (14) mit Ventilmitteln der Getränkezubereitungsvorrichtung (1) verbunden ist und dass in einer ersten Ventilstellung dieser Ventilmittel Spülmedium (15), insbesondere Heißwasser, Kaltwasser oder Dampf (4) über die Spülleitung (14) in die Ansaugleitung förderbar ist und dass in einer zweiten Ventilstellung die Spülleitung (14) die Funktion einer Luftleitung aufweist, über die in einem Milchschaumbetriebszustand der Getränkezubereitungsvorrichtung (1) der Ansaugleitung Luft zuführbar ist, bevorzugt durch Ansaugen mittels der Düseneinrichtung (2).

15. Verfahren zum Betreiben einer Getränkezubereitungsvorrichtung, (1) insbesondere Kaffeemaschine, nach einem der vorhergehenden Ansprüche,
**dadurch gekennzeichnet,**
**dass**, automatisch initiiert über die Spülleitung (14) Spülmedium (15), insbesondere Heißwasser und/oder Kaltwasser und/oder Dampf (4), in die Ansaugleitung gefördert wird und dadurch der Ventilkörper des Rückschlagventils (10) in eine Schließrichtung druckbeaufschlagt wird wodurch dieser selbsttätig dichtend mit dem Ventilsitz (12) zusammenwirkt und ein Strömen des Spülmediums (15) in der Ansaugleitung bis zum Ansaugende (17) verhindert.

16. Verfahren nach Anspruch 15,
**dadurch gekennzeichnet,**
**dass** zum Spülen des Ansaugendes (17) der Ansaugleitung der Ventilsitz (12) so, insbesondere ausschließlich manuell, relativ zu der Ventilklappe (11) verstellt wird, dass Spülfluid an der Ventilklappe (11) vorbei zum Ansaugende (17) strömt.

## Claims

1. A beverage preparation device (1), in particular a coffee machine, having a heating unit for steam generation, having a nozzle unit (2) that is connected to the heating unit in a fluid-conducting manner, for heating and/or frothing milk (7) by means of steam (4), wherein a vacuum can be generated with the aid of the nozzle unit (2) when steam is being applied, the vacuum allowing milk (9) to be sucked in via a suction line which is connected to the nozzle unit (2) in a fluid-conducting manner and to which a rinsing medium (15) can be applied via a flushing line (14), and wherein a valve unit is arranged between a suction end (17) of the suction line and the nozzle unit (2), said valve unit having an adjustable valve body, and being designed so as to prevent, in a closed position, rinsing medium (15) from flowing out of the rinsing line (14) towards the suction end (17) of the suction line, wherein the valve unit is designed as a check valve (10) which shifts automatically in a pressure-dependent manner, and whose valve body cooperates, when rinsing medium (15) is applied to the suction line via the rinsing line (14), with the valve seat (12) in an automatically sealing manner for closing the check valve (10),
**characterised by**
logic means that are designed so as to initiate a rinsing process in an automated manner, in particular in a specified or adjustable time interval and/or after a specified or adjustable beverage dispensing interval, during which process rinsing medium (15) is transported into the suction line via the rinsing line (14) and the check valve (10) is closed automatically.

2. The beverage preparation device according to claim 1,
**characterised in that**
the valve seat (12), with which the valve body cooperates in an automatically sealing manner in the closed position, is adjustable between an operative position, in which the valve body in its closed position cooperates with the valve seat (12) in a sealing manner, and a stand-by position, in which the valve body, when rinsing medium (15) is applied to the suction line via the rinsing line (14), cannot cooperate with the valve seat (12) in a sealing manner in order to make a backflush of the suction line with rinsing medium (15) up to the suction end (17) possible.

3. The beverage preparation device according to claim 2,
**characterised in that**
a gripping surface, in particular at an adjusting element (26) comprising the valve seat (12), is assigned to the valve seat (12), for a preferably exclusively manual adjustment between the operative position and the stand-by position, and/or **in that** the valve seat (12) is operatively connected to a drive mechanism, in particular to an electric motor drive, for adjustment between the operative position and the stand-by position.

4. The beverage preparation device according to any one of the claims 2 or 3,
**characterised in that**
the operative position is spaced apart from the stand-by position, preferably in a suction direction of the milk (9).

5. The beverage preparation device according to any one of the claims 2 to 4,
**characterised in that**
the valve seat (12), when being adjusted from the stand-by position into the operative position, is adjustable in the opposite direction of the suction direction or **in that** the valve seat (12), when being adjusted from the stand-by position into the operative position, is adjustable in the suction direction, in particular in such a way that the valve seat (12) and/or a component comprising the valve seat (12) can be adjusted against the valve body and moves the same and/or applies force to the same in such a way that the valve body, when rinsing medium (15) is being applied to the suction line via the rinsing line (14), cannot come to a sealing rest against the valve seat (12).

6. The beverage preparation device according to any one of the claims 2 to 5,
**characterised in that**
a stop is assigned to the valve body, against which stop the valve body rests, when the valve seat (12) is in the stand-by position, in particular at a distance to the valve seat (12), when rinsing medium (15) is being applied to the suction line via the rinsing line (14).

7. The beverage preparation device according to any one of the claims 2 to 6,
**characterised in that**
the valve seat (12) is arranged so as to be rotatable, in particular about its longitudinal axis, and **in that** guiding means (27) are assigned to the valve seat (12), for converting its rotational movement into an adjustment movement, in particular into a translatory adjustment movement, in relation to the valve flap (11), for adjusting the valve seat (12) between the operative position and the stand-by position.

8. The beverage preparation device according to any one of the preceding claims,
**characterised in that**
the valve body is designed as a valve flap (11) that is pivotable in relation to the valve seat (12).

9. The beverage preparation device according to claim 8,
**characterised in that**
the valve flap (11) is pivotably fixed to a stationary component of the beverage preparation device (1), in particular to a check valve housing (13), preferably at one end.

10. The beverage preparation device according to any one of the claims 8 or 9,
**characterised in that**
that the valve flap (11), which is preferably designed as an elastomer piece, in particular as a plate-shaped elastomer piece, is designed so as to be elastically deformable and is adjustable between an open position and the closed position by means of bending.

11. The beverage preparation device according to any one of the claims 8 to 10,
**characterised in that**
the valve flap (11), preferably in one piece, is connected to a preferably annular clamping portion (21), with the aid of which the valve flap (11) is fixed in a clamped manner between two stationary components of the beverage preparation device (1), in particular between two check valve housings (13).

12. The beverage preparation device according to any one of the preceding claims,
**characterised in that**
the check valve (10) has two housing parts (19, 20) that are preferably detachably connected to each other, in particular locked with each other, and that limit a valve space (22) in which the valve flap (11) is arranged, said check valve being fixed in a sealing manner, in particular in a detachable manner, at a module receptacle (24) of the beverage preparation device (1).

13. The beverage preparation device according to any one of the preceding claims,
**characterised in that**
the rinsing line (14) opens into the suction line in a region between the check valve (10) and the nozzle unit (2), preferably being spaced apart from the check valve (10).

14. The beverage preparation device according to any one of the preceding claims,
**characterised in that**
the rinsing line (14) is connected to valve means of the beverage preparation device (1), and **in that** in a first valve position of said valve means, a rinsing medium (15), in particular hot water, cold water or steam (4), can be transported into the suction line via the rinsing line (14), and **in that** in a second valve position, the rinsing line (14) has the function of an air line, via which air can be fed to the suction line in a milk froth operating mode of the beverage preparation device (1), preferably by way of sucking in by means of the nozzle unit (2).

15. A method for operating a beverage preparation device (1), in particular a coffee machine, according to any one of the preceding claims,
**characterised in that**
in particular after automatic initiation, rinsing medium (15), in particular hot water and/or cold water and/or steam (4), is transported into the suction line via the rinsing line (14), thereby the valve body of the check valve (10) being pressurised in a closing direction, whereby said valve body cooperates with the valve seat (12) in an automatically sealing manner, preventing the rinsing medium (15) from flowing up to the suction end (17) in the suction line.

16. The method according to claim 15,
**characterised in that**
for rinsing the suction end (17) of the suction line, the valve seat (12) is adjusted, in particular exclusively manually, in such a way in relation to the valve flap (11) that rinsing fluid flows past the valve flap (11) to the suction end (17).

## Revendications

1. Dispositif de préparation de boissons (1), notamment une machine à café, ayant une unité de chauffage pour la production de la vapeur, ayant une unité de buse (2) qui est reliée à l'unité de chauffage de manière conductrice de fluide, pour chauffer et/ou faire mousser du lait (7) au moyen de la vapeur (4), dans lequel une dépression peut être produite par l'unité de buse (2) lors d'une alimentation en vapeur, la dépression permettant du lait (9) d'être aspiré à travers d'une conduite d'aspiration qui est reliée à l'unité de buse (2) de manière conductrice de fluide et qui peut être alimentée en un liquide de rinçage (15) à travers d'une conduite de rinçage (14), et dans lequel une unité de soupape est disposée entre une extrémité d'aspiration (17) de la conduite d'aspiration et l'unité de buse (2), ladite unité de soupape présentant un corps de soupape ajustable, et ladite unité de soupape empêchant, dans une position fermée, un passage du liquide de rinçage (15) de la conduite de rinçage (14) vers l'extrémité d'aspiration (17) de la conduite d'aspiration, dans lequel l'unité de soupape est réalisée comme une soupape de retenue (10) commutant automatiquement en fonction de la pression, le corps de soupape de ladite soupape coopérant, lors d'une alimentation en liquide de rinçage (15) de la conduite d'aspiration, à travers de la conduite de rinçage (14), avec le siège de soupape (12) de manière étanchante automatiquement pour fermer la soupape de retenue (10),
**caractérisé par**
des moyens logiques réalisés à initier un processus de rinçage de manière automatisée, notamment dans un intervalle de temps stipulé ou réglable et/ou après un intervalle de prélèvement de boissons stipulé ou réglable, lors du processus de rinçage, à travers de la conduite de rinçage (14), du liquide de rinçage (15) étant transporté dans la conduite d'aspiration et la soupape de retenue (10) fermant automatiquement.

2. Dispositif de préparation de boissons selon la revendication 1,
**caractérisé en ce que**
le siège de soupape (12), avec lequel le corps de soupape coopère dans la position fermée de manière étanchante automatiquement, est ajustable entre une position de fonctionnement, dans laquelle le corps de soupape dans sa position fermée coopère avec le siège de soupape (12) de manière étanchante, et une position de stationnement, dans laquelle le corps de soupape, lors d'une alimentation de la conduite d'aspiration en liquide de rinçage (15) à travers de la conduite de rinçage (14), ne peut pas coopérer avec le siège de soupape (12) de manière étanchante pour rendre possible un rétrolavage de la conduite d'aspiration avec du liquide de rinçage (15) jusqu'à l'extrémité d'aspiration (17).

3. Dispositif de préparation de boissons selon la revendication 2,
**caractérisé en ce qu'**
une surface de préhension, notamment à un élément de réglage (26) présentant le siège de soupape (12), est attribuée au siège de soupape (12) pour l'ajustage, de préférence exclusivement manuel, entre la position de fonctionnement et la position de stationnement, et/ou **en ce que** le siège de soupape (12), pour l'ajustage entre la position de fonctionnement et la position de stationnement, est relié fonctionnellement à un entraînement, notamment un entraînement électromoteur.

4. Dispositif de préparation de boissons selon l'une quelconque des revendications 2 ou 3,
**caractérisé en ce que**
la position de fonctionnement est espacée de la position de stationnement, de préférence dans une direction d'aspiration du lait (9).

5. Dispositif de préparation de boissons selon l'une quelconque des revendications 2 à 4,
**caractérisé en ce que**
le siège de soupape (12), lors de l'ajustage de la position de stationnement dans la position de fonctionnement, est ajustable en sens inverse de la direction d'aspiration ou **en ce que** le siège de soupape (12), lors de l'ajustage de la position de stationnement dans la position de fonctionnement, est ajustable dans la direction d'aspiration, notamment de telle façon que le siège de soupape (12) et/ou un composant présentant le siège de soupape (12) est ajustable contre le corps de soupape et meut ledit corps de soupape et/ou exerce une force sur ledit corps de telle façon que le corps de soupape, lors d'une alimentation de la conduite d'aspiration en liquide de rinçage (15), à travers de la conduite de rinçage (14), ne peut pas venir en appui étanchant contre le siège de soupape (12).

6. Dispositif de préparation de boissons selon l'une quelconque des revendications 2 à 5,
**caractérisé en ce qu'**
une butée est attribuée au corps de soupape, le corps de soupape s'appuyant contre ladite butée, quand le siège de soupape (12) est dans la position de stationnement, notamment à distance du siège de soupape (12), lors d'une alimentation en liquide de rinçage (15) de la conduite d'aspiration, à travers de la conduite de rinçage (14).

7. Dispositif de préparation de boissons selon l'une quelconque des revendications 2 à 6,
**caractérisé en ce que**
le siège de soupape (12) est disposé á pouvoir tourner, notamment autour de son axe longitudinal, et **en ce que** des moyens de coulisse (27) sont attribués au siège de soupape (12) pour la conversion de son mouvement rotatif en un mouvement d'ajustage, notamment en un mouvement translationnel d'ajustage, par rapport au clapet de soupape (11), pour ajuster le siège de soupape (12) entre la position de fonctionnement et la position de stationnement.

8. Dispositif de préparation de boissons selon l'une quelconque des revendications précédentes,
**caractérisé en ce que**
le corps de soupape est réalisé comme un clapet de soupape (11) pivotable par rapport au siège de soupape (12).

9. Dispositif de préparation de boissons selon la revendication 8,
**caractérisé en ce que**
le clapet de soupape (11) est fixé de manière pivotable à un composant stationnaire du dispositif de préparation de boissons (1), notamment à un boîtier de soupape de retenue (13), de préférence à une extrémité.

10. Dispositif de préparation de boissons selon l'une quelconque des revendications 8 ou 9,
**caractérisé en ce que**
le clapet de soupape (11) qui est réalisé, de préférence, comme une pièce en élastomère, notamment en forme de plaquette, est réalisé de manière à être déformable élastiquement et peut être ajusté entre une position ouverte et la position fermée par flexion.

11. Dispositif de préparation de boissons selon l'une quelconque des revendications 8 à 10,
**caractérisé en ce que**
le clapet de soupape (11), de préférence d'une seule pièce, est relié à une section de serrage (21), qui est de préférence annulaire, par laquelle le clapet de soupape (11) est fixé de manière serrée entre deux composants stationnaires du dispositif de préparation de boissons (1), notamment entre deux boîtiers de soupape de retenue (13).

12. Dispositif de préparation de boissons selon l'une quelconque des revendications précédentes,
**caractérisé en ce que**
la soupape de retenue (10) présente deux pièces de boîtier (19, 20) qui sont reliées l'une à l'autre, de préférence de manière détachable, notamment enclenchées, et qui limitent un espace de soupape (22) ayant un clapet de soupape (11) qui est disposé en cela, ladite soupape de retenue étant fixée de manière étanchante, notamment de manière détachable, à un logement de module (24) du dispositif de préparation de boissons (1).

13. Dispositif de préparation de boissons selon l'une quelconque des revendications précédentes,
**caractérisé en ce que**
la conduite de rinçage (14) débouche dans la conduite d'aspiration dans une région entre la soupape de retenue (10) et l'unité de buse (2), de préférence étant espacée de la soupape de retenue (10).

14. Dispositif de préparation de boissons selon l'une quelconque des revendications précédentes,
**caractérisé en ce que**
la conduite de rinçage (14) est reliée à des moyens de soupape du dispositif de préparation de boissons (1), et **en ce que** dans une première position de soupape desdites moyens de soupape, du liquide de rinçage (15), notamment de l'eau chaude, de l'eau froide ou de la vapeur (4), peut être transporté dans la conduite d'aspiration à travers de la conduite de rinçage (14), et **en ce que** dans une deuxième position de soupape, la conduite de rinçage (14) présente la fonction d'une conduite d'air à travers laquelle, dans un état opérationnel de mousse de lait du dispositif de préparation de boissons (1), de l'air peut être conduit à la conduite d'aspiration, de préférence par aspiration au moyen de l'unité de buse (2).

15. Procédé de mise en oeuvre d'un dispositif de préparation de boissons (1), notamment une machine à café, selon l'une quelconque des revendications précédentes,
**caractérisé en ce que**
notamment après une initiation automatique, du liquide de rinçage (15), notamment de l'eau chaude et/ou de l'eau froide et/ou de la vapeur (4), est transporté dans la conduite d'aspiration à travers la conduite de rinçage (14), le corps de soupape de la soupape de retenue (10) ainsi étant pressurisé dans une direction de fermeture, moyennant quoi ledit corps de soupape coopère avec le siège de soupape (12) de manière étanchante automatiquement, empêchant un passage du liquide de rinçage (15) dans la conduite d'aspiration jusqu'à l'extrémité d'aspiration (17).

16. Procédé selon la revendication 15,
**caractérisé en ce que**
pour rincer l'extrémité d'aspiration (17) de la conduite d'aspiration, le siège de soupape (12) est ajusté, notamment exclusivement manuellement, par rapport au clapet de soupape (11) de telle façon que du fluide de rinçage passe par le clapet de soupape (11) jusqu'à l'extrémité d'aspiration (17).
